# EUROPEAN PATENT SPECIFICATION

(11) **EP 2 127 263 B1**
(45) Date of publication and mention of the grant of the patent: **07.05.2014**
(21) Application number: 07703195.3
(22) Date of filing: 01.02.2007
(51) Int. Cl.: H04L 12/70

(54) **Method for information dissemination in a communication network**
Verfahren zur Informationsverbreitung in einem Kommunikationsnetz
Procédé de dissémination d'information dans un réseau de communication

(43) Date of publication of application: 02.12.2009
(73) Proprietor: Nec Deutschland Gmbh, 85737 Ismaning (DE)
(72) Inventor: TORRENT MORENO, Marc, 08390 Montgat, Barcelona (ES); HARTENSTEIN, Hannes, 76275 Ettlingen (DE); FESTAG, Andreas, 68526 Ladenburg (DE)
(74) Representative: Ullrich & Naumann
(86) International application number: PCT/EP2007/000866
(87) International publication number: WO 2008/092475

(56) References cited:
- EP-A- 1 137 224
- MARC TORRENT-MORENO ED - ANONYMOUS: "Inter-vehicle communications: assessing information dissemination under safety constraints" WIRELESS ON DEMAND NETWORK SYSTEMS AND SERVICES, 2007. WONS '07. FOURTH ANNUAL CONFERENCE ON, IEEE, PI, 26 January 2007 (2007-01-26), pages 59-64, XP031069594 ISBN: 1-4244-0860-1
- FUSSLER H ET AL: "A novel forwarding paradigm for position-based routing (with implicit addressing)" COMPUTER COMMUNICATIONS, 2003. CCW 2003. PROCEEDINGS. 2003 IEEE 18TH ANNUAL WORKSHOP ON 20-21 OCT. 2003, PISCATAWAY, NJ, USA,IEEE, 20 October 2003 (2003-10-20), pages 194-200, XP010662915 ISBN: 0-7803-8239-0
- CHAWLA MOHIT, GOEL NISHITH, KALAICHELVAN KALAI, NAYAK AMIYA, STOJMENOVIC IVAN: "Beaconless Position-based Routing with Guaranteed Delivery for Wireless Ad hoc and Sensor Networks" ACTA AUTOMATICA SINICA, [Online] vol. 32, no. 6, November 2006 (2006-11), pages 846-855, XP002454069 Retrieved from the Internet: URL:http://www.site.uottawa.ca/~ivan/Beaco nless.pdf> [retrieved on 2007-10-08]
- FRACCHIA R: "Knowing Vehicles Location HELPs Avoiding Broadcast Packets Storm" PERVASIVE COMPUTING AND COMMUNICATIONS WORKSHOPS, 2006. PERCOM WORKSHOPS 2006. FOURTH ANNUAL IEEE INTERNATIONAL CONFERENCE ON PISA, ITALY 13-17 MARCH 2006, PISCATAWAY, NJ, USA,IEEE, 13 March 2006 (2006-03-13), pages 118-123, XP010910506 ISBN: 0-7695-2520-2

## Description

The present invention relates to a method for information dissemination in a communication network, preferably in a vehicular ad hoc network (VANET), wherein the communication network comprises a multitude of communication nodes, wherein said communication nodes are aware of their geographical position and provided with updated information regarding the geographical position of neighboring communication nodes, and wherein the dissemination process is initiated by one of the nodes - originator node - by sending a unicast message that includes the information to be disseminated to a specific node - first forwarder node - within a relevant area in which the information is to be disseminated.

Information dissemination in mobile communication networks is a crucial task and especially in vehicular communication networks, like VANETs (vehicular ad hoc networks), a reliable strategy to deliver messages to all vehicles located in a certain geographical area is needed. First and foremost, this holds true in case of safety messages which are related to hazardous events, e.g. traffic accidents or glaze formation.

The simplest strategy for information dissemination is the so-called flooding mechanism. Flooding means that the information to be delivered is broadcast by a node, and each node that receives the information broadcasts it again, and so on. However, flooding creates a large overhead and a high amount of packet collisions, what is known as the ,broadcast storm problem'. Although there are proposals that address this problem, the delay experienced by the information to be disseminated is not treated with high relevance. However; particularly in VANETs a short delay is needed due to the possibly critical nature of safety related information.

Another more sophisticated approach that is applied in vehicular movement scenarios, especially for highway environments, is PBR (Position-Based Routing). PBR uses the geographic position of communication nodes to decide in which direction a message should be forwarded. To this end, existing PBR protocols use beacon messages which allow each node to announce its address and geographical position to all its neighbours via a radio broadcast. Whenever a node receives such a beacon message from a neighbour, it stores the address and position of that node in its neighbour table. When a node has to forward a packet it uses the table to determine the neighbour the packet should be forwarded to in order to make progress towards the final destination. Usually, this decision is based on a geometric heuristic by selecting the neighbour minimizing the remaining distance to the destination. This process is known as ,greedy forwarding'. Although Position-Based Routing is a rather fast mechanism, due to its unicast, point to point character it has shortcomings regarding the robustness against packet loss, e.g. due to fading effects or packet collisions. Insofar, in view of the challenging propagation conditions as well as the potentially high channel load in vehicular environments, PBR is suited to only limited extent.

Furthermore, a Contention-Based Forwarding, which is referred to as CBF, has been proposed in order to perform unicast packet forwarding. In contrast to PBR, CBF does not require the transmission of beacon messages. Instead, a node broadcasts a data packet which is received by all nodes within its communication range. Among the receiving nodes the actual forwarder node is selected by a distributed timer-based contention process which allows the most-suitable node to forward the packet whereas a potential forwarding of all other receiving nodes is suppressed. It has been shown that CBF outperforms PBR in general two-dimensional scenarios with random way-point mobility. The performance advantage of CBF is most apparent in highly mobile scenarios.

However, CBF proves to be disadvantageous because of the delay which is introduced into the distribution process due to the timer-based contention mechanism. Particularly in highway scenarios, in which the communication nodes move with high velocity and in which the distribution of life related safety information is of essential importance, CBF does not constitute an appropriate solution.

In document M. Torrent-Moreno: "Inter-Vehicle Comunications: Assessing Information Dissemination under Safety Constraints", WONS '07, 4th Annual Conference On Wireless on Demand Network Systems and Services, IEEE, PI, 26 January 2007, p. 59-64, the author describes a modified CBF dissemination protocol, which is termed CBD (Contention Based Dissemination). According to this approach, the basic modification made to CBF in order to disseminate information is to adjust the addressing method. Instead of a single node, or position, the destination of a message is a geographical area. In order to cover the destination area, some intermediate nodes (forwarders) will be selected by the contention mechanism to forward the message in the direction of dissemination. A node forwarding a message by the CBD mechanism only needs to send the message in a broadcast fashion; the nodes receiving the message located in the direction of dissemination will decide, by means of the contention period, which one must re-forward the packet.

It is an object of the present invention to improve and further develop a method of the initially described type for information dissemination in a communication network in such a way that by employing mechanisms that are readily to implement the propagation delay is minimized and the robustness against uncertainties is significantly enhanced.

In accordance with the invention, the aforementioned object is accomplished by a method comprising the features of claim 1. According to this claim, such a method is characterized in that said first forwarder node forwards said message immediately to a next forwarder node, and so on, wherein each of said forwarder nodes selects a node as a next forwarder node that offers a high positive progress towards the direction of dissemination,
wherein a retransmission of said message is performed after each forwarding process of said message to a next forwarder node, on the basis of a timer-based contention process, wherein each of the other nodes in the relevant area, which receives said message sent by the originator node or a forwarder node to the respective next forwarder node,
- elects a respective forwarder node,
- starts a contention period, wherein the higher the progressed distance in the direction of dissemination with respect to the transmitter of said message, the shorter is the contention period,
- performs a unicast retransmission of said message to the forwarder node it has elected when reaching the end of its contention period, and
- aborts said contention process in case it receives said message an amount of times equal to a specific maximum.

According to the invention it has first been recognized that a pure PBR mechanism for information dissemination does not meet the requirements needed in special situations, e.g. in the case of life related safety applications. Furthermore, it has been recognized that the deficiencies of PBR are caused by the purely unicast nature of this procedure. Unicast means that the message is sent via a broadcast medium with a specific destination address in its header. Depending on the scenario and the configuration, this might result in a non tolerable amount of packet collisions. Consequently, according to the invention, the nodes which receive the message sent by the originator node to the first forwarder node do not discard the message. In fact, each of those nodes elects an appropriate forwarder node, respectively, and retransmits the message on the basis of a timer-based contention process to the forwarder node which it has elected. It should be noted, that these forwarder nodes may be identical with or may be different from the first forwarder node elected by the originator node.

The combination of a unicast position-based routing and a contention-based forwarding assures an information dissemination which is highly robust against uncertainties like collisions and propagation phenomena. The method according to the invention provides a redundancy in such a way that messages that failed to be properly transmitted from the originator node to the first forwarder node are not lost but are retransmitted by suitable neighbour nodes.

The method according to the invention is best suited for applications in highly mobiles scenarios with challenging propagation conditions and high cannel load. However, it becomes clear to someone skilled in the art that the invention is not limited to such applications. In fact, the method according to the invention can be applied in any communication network of the above mentioned type in which reliable and efficient information dissemination is crucial.

Advantageously, the relevant area in which the information has to be disseminated is defined by the originator node depending on the kind of information to be disseminated. In general, the originator node that wishes to deliver a message is aware of the relevant circumstances and, therefore, is in the position to define the relevant area, in which the information to be disseminated might be of importance. For example, the originator node could have detected a traffic accident on a highway with separated lanes for both driving directions. In this case, the relevant area may be defined by the originator node as an area which extends from the scene of accident in a direction opposite the direction of motion with a length of e.g. 500 meters or 1000 meters. In the case of a country road or rural road with non-separated lanes the relevant area may be defined as an area extending from the scene of accident in both directions of the road.

In an advantageous way, the relevant area is included in the message sent by the originator node. Thus, all nodes which are involved in the dissemination process are informed about the relevant area and can take into account this information.

In a further advantageous way, the originator node, based on the relevant area, defines at least one information propagation direction. In the example described above regarding a traffic accident, the information propagation direction/directions most suitably corresponds/correspond with the extension of the road in either or both driving directions. In case of intersections the information propagation directions could correspond with the extension of the diverging routes. In the case the relevant area is of a basically circular form the originator node could, for example, define a total of four information propagation directions, e.g, each with a separation of 90°.

The information propagation direction can be used as a basis for the originator node to elect a node as first forwarder node which has a high (or preferably the highest) positive progress towards the propagation direction. For this election process the originator node may define a forwarding area and only nodes within this forwarding area may be incorporated in the forwarder node election process. The forwarding area may be limited by the range that offers a certain configurable probability of reception of a message. The size of the forwarding area may be made smaller the higher the relevance of the message. In any case, the specific SINRs (Signal to Interference and Noise Ratios) and transmission powers of the involved nodes should be taken into account.

In a preferred embodiment, the first forwarder node, after having received the message, also defines a forwarding area and elects the node with the maximum or at least a high positive progress towards the propagation direction within the forwarding area as second forwarder node. Thereafter, the first forwarder node transmits the message to the second forwarder node, and so on. This message forwarding process can be repeated until the end of the relevant area is reached. It should be noted that this forwarding approach does not include any additional delays in neither hop. Advantageously, the retransmission of the message on the basis of a timer-based contention process is performed after each forwarding process of the message to a next forwarder node. In other words, each time the message is forwarded in the context of the unicast position-based forwarding from one forwarder node to the next forwarder node, those nodes which receive the message elect an appropriate forwarder node on their own, respectively, and retransmit the message on the basis of a timer-based contention process to the respective forwarder node.

As regards the nodes' awareness of their geographical position, the communication nodes preferably dispose of means for determining their current position. In VANETs, for example, energy consumption and miniaturization do not represent critical features, so that nodes may be equipped with a navigation system, e.g. a GPS System.

Furthermore, the communication nodes can be provided with updated information regarding the geographical position of the neighbouring nodes. To this end, beacon messages can be used which are periodically transmitted by the communication nodes in the context of other safety-mechanisms. Thus, any additional overhead encumbering the wireless medium (radio broadcast) is avoided. By means of a proactive transmission of status messages each node announces its address and geographic position to all its neighbours (i.e. nodes within single-hop transmission range) via radio broadcast. Each node can, for example, comprise a neighbour table in which this information is updated. The beaconing frequency may be adapted to the degree of mobility within the network. The status messages may include additional information regarding the speed, the direction of movement, and/or similar parameters of the respective node.

Advantageously, all communication nodes are operated in a promiscuous mode. Thus, as all messages are sent in a broadcast mode, all messages - even the unicast ones - will be received by all nodes within the communication range of a sender of a message. Consequently, a maximum number of nodes is enabled to participate in the contention process.

In a preferred embodiment the contention process is implemented as follows:
Each node that receives the message transmitted by the originator node or any forwarder node may start a timer. For each node a contention period is set which is inversely proportional to the progressed distance of the node in the direction of propagation with respect to the transmitter of the message. In other words, the higher the distance between a node and the respective forwarder node, the shorter is the contention period. As soon as the end of a node's contention period is reached, the node may retransmit the message in a broadcast mode to the next forwarder node it has elected. In this way, not only a redundancy is achieved, but at the same time it is assured that the node with the highest progressed distance in the direction of propagation will retransmit the message first. The delay introduced by the contention process is thus kept as low as possible.

In order to stop the contention process each node can be configured with a maximum number of retransmissions. In this context each node may run a counter which is incremented each time the node receives the message. The contention process may be aborted when the counter of one of the nodes involved in the contention process reaches the maximum number of retransmissions. The value for the maximum number of retransmissions may be defined by the originator node depending on the kind of information to be disseminated. In the case of (in general uncritical) traffic applications the maximum value may be set to 1, for example, so that in addition to the respective forwarder node only one other additional node retransmits the message. The more sensitive the application, the higher the maximum value may be chosen. For example, in case of a safety application the maximum value may be set to 3 or even a higher value.

As an additional or alternative parameter the size of the forwarding area may be taken into account for the definition of the maximum number of retransmissions. In general, the larger the size of the forwarding area, the higher the value of the maximum number of retransmission should be chosen. In so doing, the lower probability of reception of the message that is caused by a larger forwarding area can be compensated by a more redundant contention process.

In case of network partitions inside the relevant area, the case might occur that the information to be disseminated would not cover the relevant area completely. However, this can be a design choice, i.e., if the nodes in the relevant area have to be informed of a volatile hazard. In case the network is partitioned and the information is 'valid' for longer time, nodes not hearing a retransmission from the direction of propagation should store the information and forward it when a new neighbor is detected.

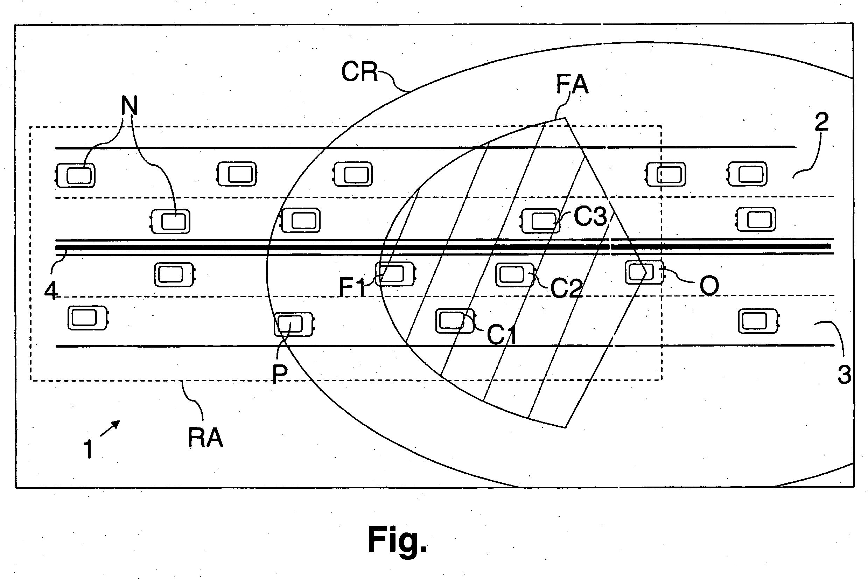

There are several ways how to design and further develop the teaching of the present invention in an advantageous way. To this end, it is to be referred to the patent claims subordinate to patent claim 1 and to the following explanation of a preferred example of an embodiment of the invention, illustrated by the figure on the other hand. In connection with the explanation of the preferred example of an embodiment of the invention by the aid of the figure, generally preferred embodiments and further developments of the teaching will be explained.

In the drawings:
The only Figure is a schematic view of an embodiment of an application scenario of a method according to the invention for information dissemination in a communication network.

In more detail, the Figure schematically depicts a part of a communication network 1. In the concrete embodiment shown the communication network 1 is a vehicular ad hoc network (VANET) which comprises a plurality of vehicles which function as communication nodes N of the communication network 1. Insofar, the words vehicle and node are used as synonyms in the context of this example. The nodes N are equipped with wireless technology so that they can exchange information among them by means of radio broadcast. Concretely, the Figure shows a highway scenario with carriageways 2, 3 that are separated from each other for both driving directions by means of a crash barrier 4.

The vehicle O detects a hazard on the road, e.g. the vehicle O experiences an accident or detects the formation of glazed frost. After detecting the hazardous event the vehicle O immediately initiates an information dissemination process in order to alert other vehicles N. To this end, the vehicle O, which in the following is referred to as originator node O, defines a relevant area RA. The relevant area is a geographical area, in which the information to be disseminated by the originator node O might be of relevance for other vehicles N. In the case of glaze detection, for example, it is very likely that there is glaze on the carriageway in the other driving direction, too. Consequently, the relevant area should extend from the originator node O in both traffic directions. In the embodiment shown in the Figure, the originator node O experienced an accident. As this information is of importance for succeeding vehicles only (due to the separation of the traffic directions by the crash barrier 4), the relevant area exceeds from the originator node O only in a direction opposite the direction of motion. The length of the relevant area may be configured depending on an average velocity of the communication nodes N. In highway scenarios with high velocities the length may be set in a range between 500 meters and 2000 meters.

In the following description it is assumed, that all nodes N are aware of the positions of their surroundings nodes N by means of a transmission of periodic status messages (beacons), which contain position, speed, direction, etc. It is further assumed, that a transmission by any node N covers the complete width of the road and that all nodes N are set to a promiscuous mode. Promiscuous mode means that each node N receives, in principle, all messages transmitted by any other node within its communication range.

In a next step after having defined the relevant area in which the information has to be disseminated, the originator node O generates a message in which the information to be disseminated is included. In general, the information to be disseminated includes the type of the detected hazard, its location and a time stamp. Next, the originator node O defines a forwarding area FA. The forwarding area FA is some kind of robust range that offers a sufficiently high probability of reception of a message due to possible interferences with other nodes and considering the specific SINR (Single to Interference and Noise Ratio) specified for the wireless cards necessary to decode successfully a transmission. Consequently, the forwarding area is smaller than the deterministic/idealistic communication range CR. By this means, the reliability and sufficiency of the dissemination process can be enhanced. In practice, the seize of the forwarding area FA may be determined depending on the traffic density and/or average velocity and/or depending on the transmission power of the originator node O, and/or depending on the sensitivity of the application, etc.

A rapid dissemination of the information is performed by a unicast position-based scheme which selects the known node inside the forwarding area FA that offers the maximum (or at least a high) positive progress with respect to the information propagation direction. The selected node, to which the message is forwarded by the originator node N, is called the first forwarder node F1. This mechanism is repeated until the relevant area is completely covered and as long as there are enough nodes N to offer full connectivity. In other words, the first forwarder node F1 defines a new forwarding area and forwards the message to a second forwarder node F2 within this area that offers the maximum (or at least a high) positive progress with respect to the information propagation direction. For the reason of clarity the second forwarder node F2 and any further forwarder node Fn are not shown in the Figure. In contrast to a contention approach, this kind of forwarding is very fast as a contention approach would include an additional delay in each hop.

Due to the fading phenomena existing in vehicle environments and potential collisions the message will be retransmitted in a broadcast fashion to increase the reliability of the dissemination scheme. The retransmission mechanism will make use of a contention period to improve its reliability. All nodes C1, C2, C3 located inside the forwarding area FA, which receive the disseminated message (and not only the ones designated to forward the message by the previous unicast position-based forwarding scheme), will start a timer-based contention period after having received the message. In order to improve the coordination among the nodes, the contention area can be defined as a circle around a node with the same radius as the forwarding area FA. The contention period for a node may be set inversely proportional to the progressed distance in the direction of propagation with respect to the transmitter. In other words, the closer a node is to the respective forwarder node F1, F2, ..., Fn, the shorter is its contention period. In the example shown in the Figure, the contention period for node C1 will be shorter than the contention period for node C2, and this one will be shorter than the contention period for node C3. A node reaching the end of the contention period retransmits the message with the address of a forwarder node elected by that node as destination address. In the example shown in the Figure, node C1 might elect the node P as forwarder node, as this node, from the view of node C1, provides the maximum positive progress towards the propagation direction.

In order to control the repetitions or duplicates transmitted to the medium nodes receiving the message from a node located inside its robust range will cancel its contention process, if running. In order to Improve reliability each node can be configured with a maximum number of retransmissions. In the latter case, the contention process will be re-started after each reception or transmission event (of the message being disseminated) until the predefined maximum is reached.

To summarize, in the following a sequential exemplary illustration is presented:
1. A vehicle (originator node) detects a safety threat and selects a relevant area for dissemination.
2. The originator node selects a ,next forwarder node' from its neighbor table, i.e., the node offering maximum geographical progress in the direction of dissemination within the forwarding area.
3. The originator node transmits a broadcast message including
   - the relevant area for dissemination
   - its own position
   - the ID of the ,next forwarder node'
4.
   a. The ,next forwarder node' forwards the message immediately with a new 'next forwarder'
   b. All other receivers of the message in the 'forwarding area' start a contention period which is inversely proportional to the progressed distance
5.
   a. When finishing the contention period:
      - transmit the message with an ID of a 'next forwarder node'
      - re-start contention (up to a specific maximum)
   b. If the message is received an amount of times equals to the specific maximum:
      - cancel contention.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for information dissemination in a communication network, preferably in a vehicular ad hoc network (VANET), wherein the communication network (1) comprises a multitude of communication nodes (N), wherein said communication nodes (N) are aware of their geographical position and provided with updated information regarding the geographical position of neighboring communication nodes (N), and wherein the dissemination process is initiated by one of the nodes - originator node (O) - by sending a unicast message that includes the information to be disseminated to a specific node - first forwarder node (F1) - within a relevant area (RA) in which the information is to be disseminated,
**characterized in that** said first forwarder node (F1) forwards said message immediately to a next forwarder node, and so on, wherein each of said forwarder nodes selects a node as a next forwarder node that offers a high positive progress towards the direction of dissemination,
wherein a retransmission of said message is performed after each forwarding process of said message to a next forwarder node on the basis of a timer-based contention process, wherein each of the other nodes (C1, C2, C3) in the relevant area (RA), which receives said message sent by the originator node (O) or a forwarder node to the respective next forwarder node,
- elects a respective forwarder node,
- starts a contention period, wherein the higher the progressed distance in the direction of dissemination with respect to the transmitter of said message, the shorter is the contention period,
- performs a unicast retransmission of said message to the forwarder node it has elected when reaching the end of its contention period, and
- aborts said contention process in case it receives said message an amount of times equal to a specific maximum.

2. Method according to claim 1, wherein the relevant area (RA) is defined by the originator node (O) depending on the kind of information to be disseminated.

3. Method according to claim 1 or 2, wherein the relevant area (RA) is included in the message sent by the originator node (O).

4. Method according to any of claims 1 to 3, wherein the originator node (O), based on the relevant area (RA), defines at least one information propagation direction.

5. Method according to any of claims 1 to4, wherein the communication nodes (N) transmit periodic status messages.

6. Method according to claim 5, wherein the status message contains information regarding the position, the speed, the direction of movement, and/or similar parameters of the respective communication node (N).

7. Method according to any of claims 1 to 6, wherein the communication nodes (N) are operated in a promiscuous mode.

8. Method according to any of claims 1 to 7, wherein said contention period is set inversely proportional to the progressed distance of the node (C1, C2, C3) in the direction of propagation with respect to the transmitter of the message.

9. Method according to any of claims 1 to 8, wherein each communication node (N) runs a counter which is incremented each time the node (N) receives the message.

10. Method according to claim 9, wherein the contention process is aborted when the counter of one of the communication nodes (C1, C2, C3) involved in the contention process reaches a configurable maximum value.

11. Method according to claim 10, wherein the value of the maximum number of retransmissions is defined by the originator node (O) depending on the kind of information to be disseminated and/or depending on the seize of the forwarding area (FA).

12. Method according to claim 10 or 11, wherein the value of the maximum number of retransmissions is set to 1 in case of a traffic application and is set to 3 or is assigned a higher value in case of a safety application.

## Patentansprüche

1. Verfahren zur Informationsverbreitung in einem Kommunikationsnetzwerk, vorzugsweise in einem Fahrzeug-Ad-hoc-Netzwerk (VANET), wobei das Kommunikationsnetzwerk (1) eine Vielzahl von Kommunikationsknoten (N) umfasst, wobei die Kommunikationsknoten (N) Kenntnis von ihrer geographischen Position haben und mit aktuellen Informationen betreffend die geographische Position von benachbarten Kommunikationsknoten (N) versorgt werden, und wobei der Verbreitungsprozess von einem der Knoten - Originatorknoten (O) - durch Senden einer Unicast-Nachricht, die die zu verbreitende Information enthält, an einen spezifischen Knoten - erster Weiterleitungsknoten (F1) - innerhalb eines relevanten Gebiets (RA), in dem die Information verbreitet werden soll, initiiert wird,
**dadurch gekennzeichnet, dass** der erste Weiterleitungsknoten (F1) die Nachricht sofort an einen nächsten Weiterleitungsknoten weiterleitet, und so weiter, wobei jeder der Weiterleitungsknoten einen Knoten als einen nächsten Weiterleitungsknoten auswählt, der einen großen positiven Fortschritt in Richtung der Verbreitungsrichtung bietet,
wobei nach jedem Weiterleitungsprozess der Nachricht an einen nächsten Weiterleitungsknoten eine erneute Übertragung der Nachricht auf Basis eines Timer-basierten Contention-Prozesses ausgeführt wird, wobei jeder der anderen Knoten (C1, C2, C3) innerhalb des relevanten Gebiets (RA), der die von dem Originatorknoten (O) oder einem Weiterleitungsknoten an den jeweiligen nächsten Weiterleitungsknoten gesendete Nachricht empfängt,
einen jeweiligen Weiterleitungsknoten auswählt,
eine Contention-Zeitdauer startet, wobei die Contention-Zeitdauer umso kürzer ist, je größer die in Bezug auf den Sender der Nachricht vorangekommene Distanz in die Verbreitungsrichtung ist,
eine erneute Unicast-Übertragung der Nachricht an den Weiterleitungsknoten, den er ausgewählt hat, ausführt, wenn das Ende seiner Contention-Zeitdauer erreicht ist, und
den Contention-Prozesses abbricht, falls er die Nachricht eine Anzahl von Malen entsprechend einem spezifischen Maximum erreicht.

2. Verfahren nach Anspruch 1, wobei das relevante Gebiet (RA) von dem Originatorknoten (O) in Abhängigkeit von der Art der zu verbreitenden Information definiert wird.

3. Verfahren nach Anspruch 1 oder 2, wobei das relevante Gebiet (RA) in der von dem Originatorknoten (O) gesendeten Nachricht enthalten ist.

4. Verfahren nach einem der Ansprüche 1 bis 3, wobei der Originatorknoten (O), basierend auf dem relevanten Gebiet (RA), mindestens eine Informations-Verbreitungsrichtung definiert.

5. Verfahren nach einem der Ansprüche 1 bis 4, wobei die Kommunikationsknoten (N) periodische Statusnachrichten aussenden.

6. Verfahren nach Anspruch 5, wobei die Statusnachricht Informationen betreffend die Position, die Geschwindigkeit, die Bewegungsrichtung und/oder ähnliche Parameter des jeweiligen Kommunikationsknotens (N) enthält.

7. Verfahren nach einem der Ansprüche 1 bis 6, wobei die Kommunikationsknoten (N) in einem "freizügigen" Modus (promiscuous mode) betrieben werden.

8. Verfahren nach einem der Ansprüche 1 bis 7, wobei die Contention-Zeitdauer umgekehrt proportional zu der in Bezug auf den Sender der Nachricht vorangekommenen Distanz des Knotens (C1, C2, C3) in die Verbreitungsrichtung festgesetzt wird.

9. Verfahren nach einem der Ansprüche 1 bis 8, wobei jeder Kommunikationsknoten (N) einen Zähler laufen lässt, welcher jedes Mal, wenn der Knoten (N) die Nachricht empfängt, inkrementiert wird.

10. Verfahren nach Anspruch 9, wobei der Contention-Prozess abgebrochen wird, wenn der Zähler eines der in den Contention-Prozess involvierten Kommunikationsknotens (C1, C2, C3) einen konfigurierbaren Maximalwert erreicht.

11. Verfahren nach Anspruch 10, wobei der Wert der maximalen Anzahl von erneuten Übertragungen von dem Originatorknoten (O) in Abhängigkeit von der Art der zu verbreitenden Information und/oder in Abhängigkeit von der Größe des Weiterleitungsgebietes (FA) definiert wird.

12. Verfahren nach Anspruch 10 oder 11, wobei der Wert der maximalen Anzahl von erneuten Übertragungen im Fall einer Verkehrsanwendung auf 1 festgesetzt wird und im Fall einer Sicherheitsanwendung auf 3 oder auf einen höheren Wert festgesetzt wird.

## Revendications

1. Procédé de diffusion d'informations dans un réseau de communication, de préférence dans un réseau ad hoc de véhicules (VANET), dans lequel le réseau de communication (1) comprend une multitude de noeuds de communication (N), dans lequel lesdits noeuds de communication (N) ont connaissance de leur propre position géographique, et sont pourvus d'informations mises à jour connexes à la position géographique de noeuds de communication voisins (N), et dans lequel le processus de diffusion est initié par l'un des noeuds, à savoir le noeud initiateur (O), par l'envoi d'un message d'envoi individuel qui inclut les informations qui doivent être diffusées à un noeud spécifique, à savoir le premier noeud de retransmission (F1), au sein d'une zone pertinente (RA) dans laquelle les informations doivent être diffusées ;
**caractérisé en ce que** ledit premier noeud de retransmission (F1) achemine ledit message immédiatement à un noeud de retransmission successif, et ainsi de suite, dans lequel chacun desdits noeuds de retransmission sélectionne un noeud en qualité de noeud de retransmission successif qui offre une progression positive élevée vers la direction de diffusion ;
dans lequel une retransmission dudit message est mise en oeuvre après chaque processus d'acheminement dudit message à un noeud de retransmission successif sur la base d'un processus de contention basé sur un temporisateur, dans lequel chacun des autres noeuds (C1, C2, C3) dans la zone pertinente (RA), qui reçoit ledit message envoyé par le noeud initiateur (O) ou un noeud de retransmission vers le noeud de retransmission successif respectif :
- choisit un noeud de retransmission respectif ;
- démarre une période de contention, dans laquelle plus la distance parcourue dans la direction de diffusion relativement à l'émetteur dudit message est élevée, plus la période de contention est courte ;
- met en oeuvre une retransmission d'envoi individuel dudit message au noeud de retransmission qu'il a choisi lorsqu'est atteinte la fin de sa période de contention ; et
- interrompt ledit processus de contention au cas où il reçoit ledit message un nombre de fois égal à un maximum spécifique.

2. Procédé selon la revendication 1, dans lequel la zone pertinente (RA) est définie par le noeud initiateur (O) en fonction de la nature des informations à diffuser.

3. Procédé selon la revendication 1 ou 2, dans lequel la zone pertinente (RA) est incluse dans le message envoyé par le noeud initiateur (O).

4. Procédé selon l'une quelconque des revendications 1 à 3, dans lequel le noeud initiateur (O), sur la base de la zone pertinente (RA), définit au moins une direction de propagation des informations.

5. Procédé selon l'une quelconque des revendications 1 à 4, dans lequel les noeuds de communication (N) transmettent des messages d'état périodiques.

6. Procédé selon la revendication 5, dans lequel le message d'état contient des informations concernant la position, la vitesse, la direction de déplacement, et/ou des paramètres similaires du noeud de communication respectif (N).

7. Procédé selon l'une quelconque des revendications 1 à 6, dans lequel les noeuds de communication (N) sont exploités dans un mode espion.

8. Procédé selon l'une quelconque des revendications 1 à 7, dans lequel ladite période de contention est définie comme étant inversement proportionnelle à la distance parcourue du noeud (C1, C2, C3) dans la direction de propagation relativement à l'émetteur du message.

9. Procédé selon l'une quelconque des revendications 1 à 8, dans lequel chaque noeud de communication (N) exécute un compteur qui est incrémenté à chaque fois que le noeud (N) reçoit le message.

10. Procédé selon la revendication 9, dans lequel le processus de contention est interrompu lorsque le compteur de l'un des noeuds de communication (C1, C2, C3) participant au processus de contention atteint une valeur maximale configurable.

11. Procédé selon la revendication 10, dans lequel la valeur du nombre maximum de retransmissions est définie par le noeud initiateur (O) en fonction de la nature des informations à diffuser et/ou en fonction de la taille de la zone d'acheminement (FA).

12. Procédé selon la revendication 10 ou 11, dans lequel la valeur du nombre maximum de retransmissions est définie sur « 1 » dans le cas d'une application de trafic, et est définie sur « 3 », ou se voit affecter une valeur plus élevée, dans le cas d'une application de sécurité.
